Europäisches Patentamt

European Patent Office

Office européen des brevets

(11) Publication number: **0 213 346**
**B1**

(12) EUROPEAN PATENT SPECIFICATION

(45) Date of publication of patent specification: 14.06.89

(51) Int. Cl.⁴: **G 11 B 5/66**

(21) Application number: **86109701.2**

(22) Date of filing: **15.07.86**

(54) Magnetic recording medium.

(30) Priority: **18.07.85 JP 156954/85**
**16.01.86 JP 4979/86**

(43) Date of publication of application:
**11.03.87 Bulletin 87/11**

(45) Publication of the grant of the patent:
**14.06.89 Bulletin 89/24**

(84) Designated Contracting States:
**DE FR GB**

(56) References cited:
**EP-A-0 152 684**
**US-A-3 520 664**
**US-A-4 511 635**
**US-A-4 550 062**
**US-A-4 552 820**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Morita, Hiroshi c/o Patent Division**
**KABUSHIKI KAISHA TOSHIBA 1-1 Shibaura**
**1-chome**
**Minato-ku Tokyo 105 (JP)**
Inventor: **Ikeda, Hiroyuki c/o Patent Division**
**KABUSHIKI KAISHA TOSHIBA 1-1 Shibaura**
**1-chome**
**Minato-ku Tokyo 105 (JP)**

(74) Representative: **Henkel, Feiler, Hänzel & Partner**
**Möhlstrasse 37**
**D-8000 München 80 (DE)**

Courier Press, Leamington Spa, England.

# Description

The present invention relates to a magnetic recording medium and, more particularly, to a thin-film type longitudinal magnetic recording medium.

Among conventional magnetic recording media, a particulate type medium is mot popular. Magnetic particles such as Fe, Fe—Co, $Fe_2O_3$, or $CrO_2$ particles are mixed with a binder of an organic resin to prepare a paste, and the paste is coated on a substrate. The paste layer is dried and baked to form a magnetic recording layer of a conventional particulate type recording medium.

Demand has recently arisen for high-density recording media. In order to satisfy this demand, a continuous thin-film type recording medium having a high coercivity is becoming more popular than the particulate type medium. Along with this tendency, a method of forming a recording layer is changing from conventional coating to plating or sputtering.

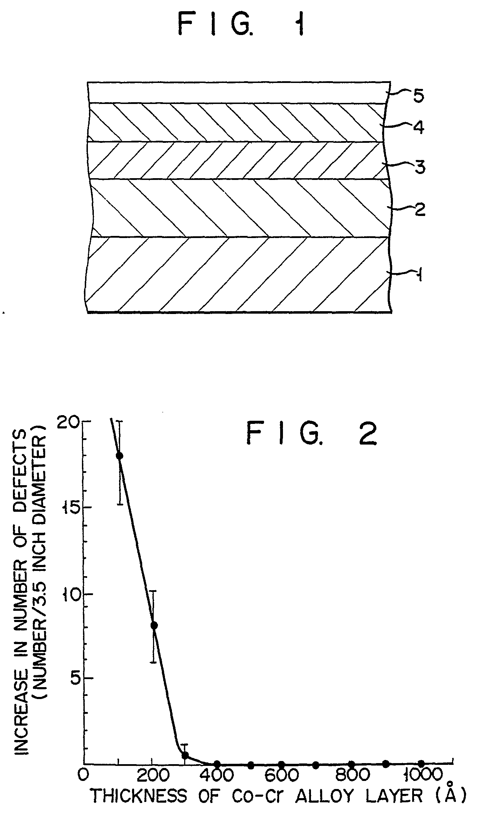

Under these circumstances, demand for the thin-film type recording medium is based on assumptions that this magnetic recording layer is thin and that a sufficiently high reproducing output can be obtained. In a conventional thin-film type recording medium, a cobalt based alloy film is used as a magnetic recording layer. As shown in Fig. 1, smoothing layer 2 is formed on non-magnetic substrate 1, and orientating layer 3 having Cr as a major constituent is formed on smoothing layer 2. Magnetic recording layer 4 is formed on orientating layer 3, and protective layer 5 is formed on layer 4.

A 50—100 nm (500—1,000-Å) thick magnetic recording layer of a Co—Ni based alloy can produce a sufficiently high reproducing output but has poor resistance to corrosion. In order to improve resistance to corrosion, non-magnetic layers of SiO or Cr having high resistance to corrosion and a thickness of several tens of nm (hundreds of angstroms) are formed beneath a Co—Ni based alloy recording layer, as disclosed in U.S.P. No. 3,520,664.

A gap between a magnetic head and the magnetic recording medium must be as narrow as about 200 nm (2,000Å) in order to obtain a desired reproducing power. If the non-magnetic layer having a thickness of several hundreds of angstroms is formed, the gap between the magnetic head and the magnetic recording layer is dominated by the thickness of the non-magnetic layer. As a result, the reproducing output decreases because of such a spacing loss.

The use of a Co—Cr based alloy is known in forming a magnetic recording layer. Although the Co—Cr based alloy has high resistance to corrosion, there is only a small saturated magnetizing amount inherent to the material itself. In order to obtain a sufficiently high reproducing output, the thickness of the magnetic recording layer must be as large as 100 to 200 nm (1,000 to 2,000Å). In case of Co—Cr based alloy, however, such a large thickness decreases the coercivity.

US—A—4 511 635 and US—A—4 550 062 disclose magnetic recording media for use as video tapes with a first magnetic recording layer composed of a Co—Ni-alloy and containing oxygen and a second magnetic recording layer composed of a Co—Cr-based alloy both formed on a flexible substrate consisting of a high molecular film. It should be noted that the recording medium disclosed in said documents is used in direct contact with a magnetic head. In the present invention, however, the substrate is rigid, and a predetermined gap is provided between the magnetic recording medium and the magnetic head during the use.

Examples V and I of EP—A—0 152 684 describes a magnetic recording material comprising a rigid aluminium alloy substrate bearing, in order, a chromium (orienting) layer, a Co—Ni magnetic layer and a Co—Ni—Cr protective layer which is also magnetic. The present invention differs from what is described in EP—A—0 152 684 in so far as the thicknesses of the magnetic layers and the presence of a protective lubricant layer are concerned.

Taking the demand for high-density recording layers into consideration, Co—Ni and Co—Cr based alloys are unsatisfactory since they respectively have limits of corrosion resistance and film thickness. Therefore, demand has arisen for developing a new and improved magnetic recording layer free from the above problems.

It is an object of the present invention to provide a magnetic recording medium with a magnetic recording layer having high resistance to corrosion, without impairing the reproducing output.

In order to achieve the above object of the present invention, there is provided a magnetic recording medium comprising in order a non-magnetic rigid substrate, a non-magnetic orientating layer, a first magnetic recording layer of a cobalt-nickel based alloy, and a second magnetic layer of a cobalt-chromium based alloy, characterized in that a protective lubricant layer is formed on the second magnetic layer, the first magnetic recording layer has a thickness of 40 to 80 nm, and the second magnetic recording layer has a thickness of 30 to 50 nm.

The first and second magnetic recording layers can be formed by vacuum evaporation, sputtering, ion plating, or plating.

The first magnetic recording layer helps obtain a high reproducing output in spite of its small film thickness. The second magnetic recording layer helps prevent corrosion of the first magnetic recording layer, as well as helping to improve the spacing loss because of the magnetic recording property inherent thereto.

The thickness of the first magnetic recording layer is 200 nm (2,000Å) or less, preferably 10 to 200 (100 to 2,000Å), and more preferably 40 to 80 nm (400 to 800Å).

An example of the cobalt based alloy constituting the first magnetic recording layer is a Co—Ni based alloy. The content of Ni in the Co—Ni based alloy is preferably 10 to 30 atomic %. At least one element selected from the group consisting of Fe, P, W, Pt, Cr, and O can be added in the Co—Ni based alloy. The content of Fe, P, W, Pt, and/or Cr is preferably 30 atomic % or less, and the content of O is preferably 5 to 15 atomic %.

The above elements can be added to improve an electromagnetic conversion property of the Co—Ni based alloy. If a magnetic recording layer of an additive-containing Co—Ni based alloy has the same thickness as that of a magnetic recording layer of the Co—Ni based alloy without additives, saturated magnetization and coercivity can be improved. If the additive element is Fe, saturated magnetization and squareness can be particularly improved. If the additive elements are Pt, W, and/or P, coercivity and squareness are particularly improved. If the additive element is Cr, coercivity and resistance to corrosion can be particularly improved. If the additive element is O, magnetic properties, especially coercivity, are improved. In this way, a high-density recording medium can be prepared.

The cobalt based alloy constituting the first magnetic recording layer is not limited to the Co—Ni based alloy, but can be extended to a Co—X based alloy (wherein X is at least one element selected from the group consisting of Pt, Y, La, Ce, Pr, Sm, Nd, and Pm). The content of X in the Co—X based alloy is preferably 5 to 40 atomic %.

The content of Cr in the Co—Cr based alloy constituting the second magnetic recording layer is preferably 10 to 30 atomic %.

The thickness of the second magnetic recording layer must be minimized as long as corrosion of the first magnetic recording layer can be prevented, and is preferably 30 to 50 nm (300 to 500Å).

As is apparent from the above description, if the thickness of the first magnetic recording layer falls within the range of 40 to 80 nm (400 to 800Å) and the thickness of the second magnetic recording layer falls within the range of 30 to 50 nm (300 to 500Å), a high density recording medium having very stable characteristics can be formed.

Japanese Patent Disclosure No. 54-51804 discloses formation of a high permeability layer (e.g., a Parmalloy layer). However, the Co—Cr based alloy layer is used as a vertical (or perpendicular) magnetic recording layer. The high permeability layer serves to concentrate the magnetic flux from an auxiliary magnetic pole of a perpendicular recording magnetic head on the main magnetic pole. Therefore, the high permeability layer does not serve as a magnetic recording layer and clearly differs from the first magnetic recording layer of the present invention.

According to the present invention, formation of the first and second magnetic recording layers having different functions provides a longitudinal recording medium having high resistance to corrosion, as well as one free from the spacing loss and capable of performing longitudinal recording.

This invention can be more fully understood from the following detailed description when taken in conjunction with the accompanying drawings, in which:

Fig. 1 is a sectional view showing part of a conventional magnetic recording medium;

Fig. 2 is a graph showing the increase in the number of defects in a magnetic recording medium of the present invention as a function of the thickness of a Co—Cr based alloy layer when a corrosion test is made;

Fig. 3 is a graph showing the signal output as a function of the thickness of the first magnetic recording layer in the magnetic recording medium;

Fig. 4 is a sectional view showing part of a magnetic recording medium according to an embodiment of the present invention;

Fig. 5 is a sectional view showing part of a magnetic recording medium according to another embodiment of the present invention;

Fig. 6 is a sectional view showing part of a magnetic recording medium according to still another embodiment of the present invention; and

Fig. 7 is a sectional view showing part of a magnetic recording medium according to still another embodiment of the present invention.

The present inventors made various experiments to obtain thicknesses of first and second magnetic recording layers having a high reproducing output and high resistance to corrosion in a magnetic recording medium having a first magnetic recording layer of a Co—Ni based alloy containing 10 to 30 atomic % of Ni and a second magnetic recording layer of a Co—Cr based alloy containing 10 to 30 atomic % of Cr.

Experiment 1

In order to examine corrosion resistance, the thickness of the second magnetic recording layer of the Co—Cr based alloy varied from 10 to 100 nm (100Å to 1,000Å) in the performance of an acceleration test. During the test, the medium was placed in a thermostat having a temperature of 85°C and a relative humidity of 85% for 700 h. The degree of corrosion was measured by an increase in the number of defects in an area of a 3.5″ diameter. The results are shown in Fig. 2. When the thickness of the Co—Cr based alloy layer was smaller than 30 nm (300Å), a large increase in corrosion occurred. In this experiment, although the thickness of the first magnetic recording layer varied from 10 to 100 nm (100 to 1,000Å), the corrosion state was found to depend only on the thickness of the second magnetic recording layer. A 10 to 30 nm (100- to 300-Å) thick carbon lubricant layer was formed on the outermost surfaces of some of the practical mediums. However, the degree of corrosion of the first magnetic recording layer did not depend on the presence or absence of the carbon lubricant layer.

Experiment 2

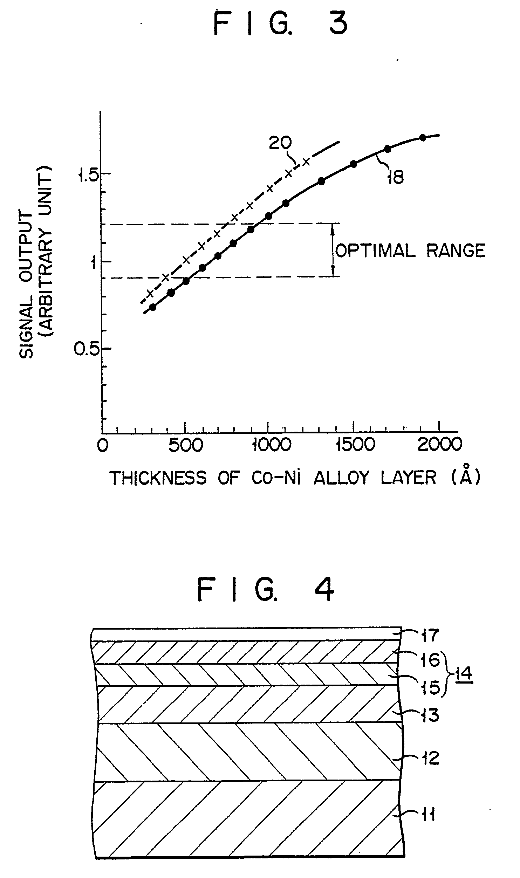

Thicknesses of the above respective layers were also examined according to signal outputs. The signal outputs as a function of thickness of the first magnetic recording layer (Co—Ni) were plotted as curve 18 in Fig. 3. When the signal outputs and the film thicknesses were selected within the range which did not result in a decrease in S/N ratio, the optimal Co—Ni film thickness fell within the range of 50 to 100 nm (500 to 1,000Å). When the second magnetic recording layer (Co—Cr based alloy) was stacked on the first magnetic recording layer, the second magnetic recording layer itself contributed to signal reproducing outputs. Therefore, the optimal range was shifted to the side corresponding to smaller thicknesses (when the Co—Cr based alloy layer had a thickness of 30 nm (300Å, as indicated by curve 20 in Fig. 3. However, when the thickness of the second magnetic recording layer exceeds 50 nm (500Å), the overall thickness of the magnetic recording layer increased, thereby rapidly degrading the recording density characteristics.

The present inventors therefore found that a very stable high-density recording medium could be prepared if the thickness of the first magnetic recording layer fell within the range of 40 to 80 nm (400Å to 800Å), and the thickness of the second magnetic recording layer fell within the range of 30 to 50 nm (300Å to 500Å).

The present invention will be described in detail by way of examples in conjunction with the accompanying drawings.

Example 1

Fig. 4 is a sectional view showing part of a magnetic recording medium as one embodiment of the present invention.

Referring to Fig. 4, a 8.9 cm (3.5") aluminum based alloy disc was used as non-magnetic substrate 11. Non-magnetic smoothing layer 12 was formed by Ni—P plating and mirror polishing on the non-magnetic substrate 11. A magnetic recording layer, a protective/lubricant layer, and the like were sequentially formed on smoothing layer 12 by a RF diode sputtering apparatus. A film formation process and its conditions are given as follows. A substrate turntable rotated about its axis at a speed of 6 rpm to obtain a uniform film thickness and uniform magnetic characteristics. Film formation was performed at an initial vacuum pressure of $1.064 \times 10^{-4}$ Pa ($8.0 \times 10^{-7}$ Torr), an Ar gas pressure of $0.532 \times 10^{-4}$ Pa ($4.0 \times 10.2^{-2}$ Torr), and a sputtering power of 300 W at room temperature. 300 nm (3,000-Å) Cr orientating layer 13 was formed to improve crystallographic properties of the magnetic recording layer. A 70 nm (700-Å) thick Co—Ni based alloy layer was formed as first magnetic recording layer 15, by sputtering a Co—Ni based alloy target. Then, a 70 nm (700-Å) thick Co—Cr based alloy layer was formed as second magnetic recording layer 16 by sputtering a Co—Cr based alloy target. Thus, a two-layered film as magnetic recording layer 14 is constituted. 30 to 50 nm (300- to 500-Å) thick carbon protective/lubricant layer 17 was formed as the outermost layer, by sputtering a carbon target.

The magnetic characteristics of the resultant magnetic recording medium were measured. A longitudinal coercivity was 55720 A/m (700 Oe). Good results were also obtained for saturated magnetization and other magnetic characteristics. Electromagnetic conversion characteristic measurement, a test for wear by the head, and a corrosion test were then performed. In terms of the electromagnetic conversion characteristics, high-density recording of 20 kbpi (kbit/2.54 cm) (kbit/inch) ($D_{50}$) to 40 kbpi could be performed. A contact start and stop test as the wear test for bringing the medium into contact with the magnetic head 200 000 times proved that the disk surface was not at all damaged.

The medium was exposed at a temperature of 80°C and a relative humidity of 80% for 700 h. No changes were noticed in its outer appearance. No increase in the number of defects was found. Therefore, the magnetic recording medium was confirmed to have a sufficient anticorrosion property.

Example 2

Aluminum based alloy non-magnetic substrate 11 was used as non-magnetic substrate 11, as in Example 1. Non-magnetic smoothing layer 12 of alumina ($Al_2O_3$) was formed on the surface of substrate 11 by anodic oxidation. Following the same procedures as in Example 1, non-magnetic metal orientating layer 13, first and second magnetic recording layers 15 and 16, and protective/lubricant layer 17 were formed. The same effect as in Example 1 was obtained in Example 2.

Example 3

A 8.89 cm (3.5") aluminum based alloy disk was used as non-magnetic substrate 11, and non-magnetic smoothing layer 12 obtained by Ni—P plating and mirror polishing was formed on the surface of substrate 11. A 300 nm (3,000Å) thick Cr layer was formed as orientating layer 13. A 70 nm (700-Å) thick Co—Sm based alloy layer containing 16 atomic % of Sm was formed as first magnetic recording layer 15 on orientating layer 13, and a 50 nm (500-Å) thick Co—Cr based alloy layer was formed thereon as second magnetic recording layer 16, thereby constituting a two-layered film as magnetic recording layer 14. 300- to 50 nm (500-Å) thick carbon protective/lubricant layer 17 was formed as the outermost layer.

The magnetic characteristics of the resultant magnetic recording medium were measured. A longitudinal coercivity was 63680 A/m (800 Oe). Good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 30 kbpi (kbit/2.54 cm) (kbit/inch) to 40 kbpi could be performed. The contact start-stop test as the wear test for bringing the medium into contact with the magnetic head 200 000 times proved that the disk surface was not at all damaged.

The medium was exposed at a temperature of 80°C and a relative humidity of 80% for 7 hours. No changes were noticed in its outer appearance. No increase in the number of defects was found. Therefore, the magnetic recording medium was confirmed to have a sufficient anticorrosion property.

Example 4

Following the same procedures as in Example 3, a magnetic recording medium was prepared except that a 60 nm (600-Å) thick Co—Ce based alloy layer containing 20 atomic % of Ce was formed as first magnetic recording layer 15. The magnetic characteristics of the resultant magnetic recording medium were obtained as follows. In terms of the magnetic characteristics, a coercivity was 59700 A/m (750 Oe). In terms of the electromagnetic conversion characteristics, a low-end output was 1.0 mV, and a linear recording density was 26 kbpi. The same good anticorrosion property as in Example 3 was obtained.

Example 5

A 8.89 cm (3.5″) aluminum based alloy disk was used as non-magnetic substrate 11, and non-magnetic smoothing layer 12 obtained by Ni—P plating and mirror polishing was formed thereon. A 300 nm (3,000-Å) thick Cr layer was formed as orientating layer 13 to improve crystallographic properties of the magnetic recording layer A 70 nm (700-Å) thick Co—Ni—Fe based alloy layer containing 17 atomic % of Ni, 8 atomic % of Fe, and the balance of Co was formed as first magnetic recording layer 15 on orientating layer 13, and a 50 nm (500-Å) thick Co—Cr based alloy layer was formed as second magnetic recording layer 16 on first magnetic recording layer 15, thereby constituting a two-layered film as magnetic recording layer 14. 30 to 50 nm (300- to 500-Å) thick carbon protective/lubricant layer 17 was formed as the outermost layer.

The magnetic characteristics of the resultant magnetic recording medium were measured. A longitudinal coercivity was 55720 A/m (700 Oe). A saturated magnetizing amount was increased by about 15% compared with the Co—Ni based alloy. In addition, good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 20 kbpi (kbit/ 2.54 cm) (kbit/inch) to 40 kbpi could be performed. An increase in output was found according to the increase in saturated magnetizing amount. The contact start and stop test as the wear test for bringing the medium into contact with the magnetic head 200 000 times proved that the disk surface was not at all damaged.

The medium was exposed at a temperature of 80°C and a relative humidity of 80% for 700 h. No changes were noticed in its outer appearance. No increase in the number of defects was found. Therefore, the magnetic recording medium was confirmed to have a sufficient anticorrosion property.

Example 6

Following the same procedure as in Example 5, a magnetic recording medium was prepared except that a 70 nm (700-Å) thick Co—Ni—Pt based alloy layer containing 15 atomic % of Ni, 5 atomic % of Pt, and the balance of Co was formed as first magnetic recording layer 15. The magnetic characteristics of the resultant magnetic recording medium were obtained as follows. In terms of the magnetic characteristics, a coercivity was 59700 A/m (750 Oe). In terms of the electromagnetic conversion characteristics, a low-end output was 1.0 mV, which was the same as the Co—Ni based alloy, and a linear recording density was 26 kbpi, which was higher than that (22 kbpi) of the Co—Ni based alloy.

Example 7

Following the same procedures as in Example 5, a magnetic recording medium was prepared except that a 70 nm (700-Å) thick Co—Ni—Cr based alloy layer containing 25 atomic % of Ni, 7 atomic % of Cr, and the balance of Co was formed as first magnetic recording layer 15. The magnetic characteristics of the resultant magnetic recording medium were obtained as follows. A coercivity was 57312 A/m (720 Oe), a low-end output was 0.95 mV, and a linear recording density was 24 kbpi. These results were better than those of Co—Ni based alloys.

Example 8

A 8.89 cm (3.5″) aluminum based alloy disk was used as non-magnetic substrate 11 in Fig. 4, and non-magnetic smoothing layer 12 obtained by Ni—P plating and mirror polishing was formed thereon. A 200 nm (2,000-Å) thick Cr layer was formed as orientating layer 13 to improve crystallographic properties of the magnetic recording layer A 50 nm (500-Å) thick Co—Ni based alloy layer was formed as first magnetic recording layer 15 on orientating layer 13, and a 40 nm (400-Å) thick Co—Cr based alloy layer was formed as second magnetic recording layer 16 on first magnetic recording layer 15, thereby constituting a two-layered film as magnetic recording layer 14. 20 nm (200-Å) thick carbon protective/lubricant layer 17 was formed as the outermost layer.

The magnetic characteristics of the resultant magnetic recording medium were measured. A longitudinal coercivity was 63680 A/m (800 Oe). Good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 30 kbpi (kbit/2.54 cm) (kbit/ inch) could be performed. An increase in output was found according to the increase in saturated magnetizing amount. The contact start-stop test as the wear test for bringing the medium into contact with the magnetic head 200 000 times proved that the disk surface was not at all damaged.

The medium was exposed at a temperature of 85°C and a relative humidity of 85% for 1 000 h. No changes were noticed in its outer appearance. No increase in the number of defects was found. Therefore, the magnetic recording medium was confirmed to have a sufficient anticorrosion property.

Example 9

Aluminum based alloy non-magnetic substrate 11 was used, as in Example 8. Non-magnetic smoothing layer 12 of alumina ($Al_2O_3$) was formed on the surface of substrate 11 by anodic oxidation. Following the same procedures as in Example 8, non-magnetic metal orientating layer 13, first and second magnetic recording layers 15 and 16, and protective/lubricant layer 17 were formed. In addition, under Ar gas atmosphere containing 30 atomic % of O, a Co—Ni based alloy target was sputtered, thereby depositing a Co—Ni—O based alloy film containing 10 atomic % of O on first magnetic recording layer 15.

A longitudinal coercivity was 67660 A/m (850 Oe). The electromagnetic conversion characteristic was measured as a high density of 32 kbpi. The magnetic recording medium had the same durability and anticorrosion property as those in Example 8.

Example 10

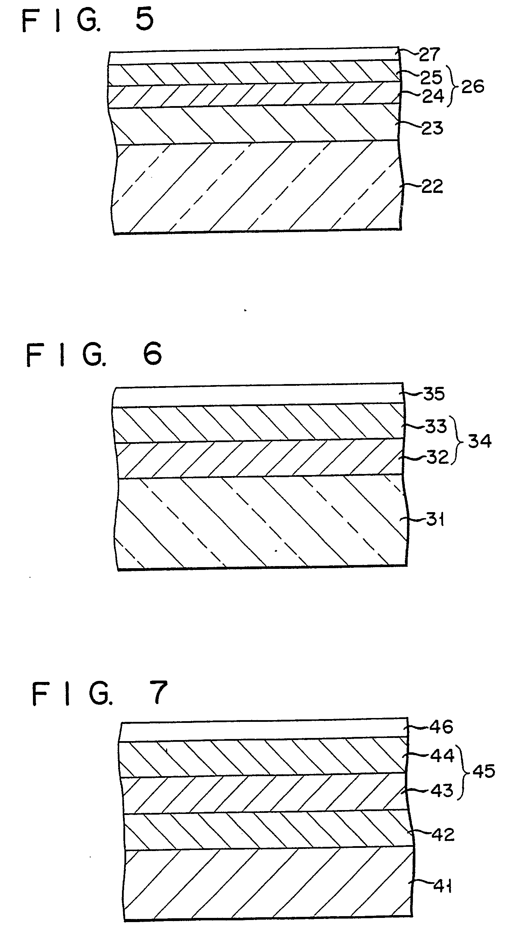

Referring to Fig. 5, a (13,34 cm (5.25″) smooth glass plate was used as non-magnetic substrate 22. A magnetic recording layer, a protective/lubricant layer, and the like were sequentially formed on substrate 22 by a magnetron RF sputtering apparatus. A film formation process and its conditions are given as follows. A substrate turntable rotated about its axis at a speed of 10 rpm to obtain a uniform film thickness and uniform magnetic characteristics. Film formation was performed at an initial vacuum pressure of $0.665 \times 10^{-4}$ Pa ($5.0 \times 10^{-7}$ Torr), an Ar gas pressure of $0.399 \times 10^{-4}$ Pa ($3.0 \times 10^{-2}$ Torr), and a sputtering power of 1 000 W at room temperature. 350 nm (3,500-Å) Cr orientating layer 23 was formed to improve crystallographic properties of the magnetic recording layer. A 45 nm (450Å) thick Co—Ni—Fe based alloy layer containing 17 atomic % of Ni, 8 atomic % of Fe, and the balance of Co was formed as first magnetic recording layer 24, and a 30 nm (300-Å) thick Co—Cr based alloy layer was then formed as second magnetic recording layer 25, thereby constituting a two-layered film as magnetic recording layer 26. 20 nm (200-Å) thick carbon protective/lubricant layer 27 was formed as the outermost layer.

The magnetic characteristics of the resultant magnetic recording medium were measured. A longitudinal coercivity was 71640 A/m (900 Oe). A saturated magnetizing amount was increased by about 15% compared with Co—Ni based alloys. Good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 34 kbpi (kbit/2.54 cm) (kbit/inch) could be performed. The contact start-stop test as the wear test for bringing the medium into contact with the magnetic head 200 000 times proved that the disk surface was not at all damaged.

The medium was exposed at a temperature of 85°C and a relative humidity of 85% for 1 000 h. No changes were noticed in its outer appearance. No increase in the number of defects was found. Therefore, the magnetic recording medium was confirmed to have a sufficient anticorrosion property.

Example 11

Referring to Fig. 6, a 8.89 cm (3.5″) smooth glass plate was used as non-magnetic substrate 31. A magnetic recording layer, a protective/lubricant layer, and the like were sequentially formed on substrate 31 by a magnetron RF sputtering apparatus. A film formation process and its conditions are given as follows. A substrate turntable rotated about its axis at a speed of 6 rpm to obtain a uniform film thickness and uniform magnetic characteristics. Film formation was performed at an initial vacuum pressure of $0.665 \times 10^{-4}$ pa ($5.0 \times 10^{-7}$ Torr), an Ar gas pressure of $0.532 \times 10^{-4}$ Pa ($4.0 \times 10^{-2}$ Torr), and a sputtering power of 1 000 W at room temperature. A 70 nm (700-Å) thick Co—Sm based alloy layer containing 16 atomic % of Sm was formed as first magnetic recording layer 32, and a 30 nm (300-Å) thick Co—Cr based alloy layer was then formed as second magnetic recording layer 33, thereby constituting a two-layered film as magnetic recording layer 34. 30 nm (300-Å) thick carbon protective/lubricant layer 35 was formed as the outermost layer.

The magnetic characteristics of the resultant magnetic recording medium were measured. A longitudinal coercivity was 71640 A/m (900 Oe). Good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 34 kbpi (kbit/2.54 cm) (kbit/inch) could be performed. The contact start-stop test as the wear test for bringing the medium into contact with the magnetic head 200 000 times proved that the disk surface was not at all damaged.

The medium was exposed at a temperature of 85°C and a relative humidity of 85% for 1 000 h. No changes were noticed in its outer appearance. No increase in the number of defects was found. Therefore, the magnetic recording medium was confirmed to have a sufficient anticorrosion property.

Example 12

Referring to Fig. 7, a 13.34 cm (5.25") aluminum based alloy disk was used as non-magnetic substrate 41. Non-magnetic smoothing layer 42 was formed by Ni-P plating and mirror polishing on the non-magnetic substrate 41. A magnetic recording layer, a protective/luricant layer, and the like were sequentially formed on smoothing layer 42 by a magnetron RF sputtering apparatus. A film formation process and its conditions are given as follows. A substrate turntable rotated about its axis at a speed of 10 rpm to obtain a uniform film thickness and uniform magnetic characteristics. Film formation was performed at an initial vacuum pressure of $0.665 \times 10^{-4}$ Pa ($5.0 \times 10^{-7}$ Torr), an Ar gas pressure of $0.532 \times 10^{-4}$ Pa ($4.0 \times 10^{-2}$ Torr), and a sputtering power of 1 000 W at room temperature. A 70 nm (700-Å) thick Co-Sm based alloy layer containing 16 atomic % of Sm was formed as first magnetic recording layer 43, and a 50 nm (500-Å) thick Co—Cr based alloy layer was then formed as second magnetic recording layer 44, thereby constituting a two-layered film as magnetic recording layer 45. 30 nm (300Å) thick carbon protective/lubricant layer 46 was formed as the outermost layer.

The magnetic characteristics of the resultant magnetic recording medium were measured. A longitudinal coercivity was 75620 A/m (950 Oe). Good results were also obtained for saturated magnetization and other magnetic characteristics. Electromagnetic conversion characteristic measurement, a test for wear by the head, and a corrosion test were performed. In terms of the electromagnetic conversion characteristics, high-density recording of 36 kbpi (kbit/2.54 cm) (kbit/inch) could be performed. The contact start-stop test as the wear test for bringing the medium into contact with the magnetic head 200 000 times proved that the disk surface was not at all damaged.

The medium was exposed at a temperature of 85°C and a relative humidity of 85% for 1,000 h. No changes were noticed in its outer appearance. No increase in the number of defects was found. Therefore, the magnetic recording medium was confirmed to have a sufficient anticorrosion property.

## Claims

1. A magnetic recording medium, comprising in order a non-magnetic rigid substrate, a non-magnetic orientating layer, a first magnetic recording layer of a cobalt-nickel based alloy, and a second magnetic layer of a cobalt-chromium based alloy, characterized in that a protective lubricant layer (17) is formed on the second magnetic layer (16), the first magnetic recording layer (15) has a thickness of 40 to 80 nm, and the second magnetic recording layer (16) has a thickness of 30 to 50 nm.

2. A medium according to claim 1, characterized in that the content of nickel in the cobalt-nickel based alloy is 10 to 30 atomic %.

3. A medium according to claim 1, characterized in that the cobalt-nickel based alloy contains at least one additive selected from the group consisting of Fe, P, W, Pt, and Cr.

4. A medium according to claim 3, characterized in that the content of the additive in the cobalt-nickel based alloy is not more than 30 atomic %.

5. A medium according to claim 1, characterized in that the cobalt-nickel based alloy contains O.

6. A medium according to claim 5, characterized in that the content of O in the cobalt-nickel based alloy is 5 to 15 atomic %.

7. A medium according to claim 1, characterized in that the content of chromium in the cobalt-chromium based alloy is 10 to 30 atomic %.

## Patentansprüche

1. Magnetisches Aufzeichnungsmaterial, das—in der angegebenen Reihenfolge—auf einem nicht-magnetischen starren Schichtträger eine nicht-magnetische Orientierungsschicht, eine erste magnetische Aufzeichnungsschicht aus einer Legierung auf Kobalt-Nickel-Basis und eine zweite magnetische Schicht aus einer Legierung auf Kobalt-Chrom-Basis aufweist, dadurch gekennzeichnet, daß auf der zweiten magnetischen Schicht (16) eine schützende Gleitschicht (17) vorgesehen ist und daß die erste magnetische Aufzeichnungsschicht (15) eine Dicke von 40—80 nm und die zweite magnetische Aufzeichnungsschicht (16) eine Dicke von 30—50 nm aufweisen.

2. Material nach Anspruch 1, dadurch gekennzeichnet, daß der Gehalt an Nickel in der Legierung auf Kobalt-Nickel-Basis 10—30 Atom-% beträgt.

3. Material nach Anspruch 1, dadurch gekennzeichnet, daß die Legierung auf Kobalt-Nickel-Basis mindestens einen Zusatz aus der Gruppe Fe, P, W, Pt und Cr enthält.

4. Material nach Anspruch 3, dadurch gekennzeichnet, daß der Gehalt an dem Zusatz in der Legierung auf Kobalt-Nickel-Basis nicht mehr als 30 Atom-% beträgt.

5. Material nach Anspruch 1, dadurch gekennzeichnet, daß die Legierung auf Kobalt-Nickel-Basis O enthält.

6. Material nach Anspruch 5, dadurch gekennzeichnet, daß der Gehalt an O in der Legierung auf Kobalt-Nickel-Basis 5—15 Atom-% beträgt.

7. Material nach Anspruch 1, dadurch gekennzeichnet, daß der Gehalt an Chrom in der Legierung auf Kobalt-Chrom-Basis 10—30 Atom-% beträgt.

## Revendications

1. Un milieu d'enregistrement magnétique, comprenant dans cet ordre, un substrat rigide non magnétique, une couche d'orientation non magnétique, une première couche d'enregistrement magnétique en un alliage à base de cobalt-nickel, et une seconde couche magnétique en un alliage à base de cobalt-chrome, caractérisé en ce qu'une couche lubrifiante protectrice (17) est formée sur la seconde couche magnétique (16), la première couche d'enregistrement magnétique (15) a une épaisseur de 40 à 80 nm, et la seconde couche d'enregistrement magnétique (16) a une épaisseur de 30 à 50 nm.

2. Un milieu selon la revendication 1, caractérisé en ce que la teneur en nickel de l'alliage à base de cobalt-nickel est de 10 à 30% atomiques.

3. Un milieu selon la revendication 1, caractérisé en ce que l'alliage à base de cobalt-nickel contient au moins un additif choisi dans le groupe comprenant Fe, P, W, Pt, et Cr.

4. Un milieu selon la revendication 3, caractérisé en ce que la teneur de l'additif dans l'alliage à base de cobalt-nickel ne dépasse pas 30% atomiques.

5. Un milieu selon la revendication 1, caractérisé en ce que l'alliage à base de cobalt-nickel contient O.

6. Un milieu selon la revendication 5, caractérisé en ce que la teneur en O dans l'alliage à base de cobalt-nickel est de 5 à 15% atomiques.

7. Un milieu selon la revendication 1, caractérisé en ce que la teneur en chrome de l'alliage à base de cobalt-chrome est de 10 à 30% atomiques.

# F I G. 1

# F I G. 2

# FIG. 3

# FIG. 4

# F I G. 5

27
25
24 } 26
23
22

# F I G. 6

35
33
32 } 34
31

# F I G. 7

46
44
43 } 45
42
41